# EUROPÄISCHE PATENTSCHRIFT

(11) **EP 3 266 096 B1**
(45) Veröffentlichungstag und Bekanntmachung des Hinweises auf die Patenterteilung: **05.05.2021**
(21) Anmeldenummer: 16707811.2
(22) Anmeldetag: 04.03.2016
(51) Int. Cl.: H02K 15/12, H02K 1/02, H02K 1/27, H02K 1/30, H02K 15/03

(54) **ROTOR FÜR EINEN ELEKTROMOTOR, ZUGEHÖRIGE MOTORWELLE SOWIE VERFAHREN ZU DEREN HERSTELLUNG**
ROTOR FOR AN ELECTRIC MOTOR, ASSOCIATED SHAFT AND METHOD FOR PRODUCING THE SAME
ROTOR POUR UN MOTEUR ÉLECTRIQUE, ARBRE ASSOCIÉ ET PROCÉDÉ DE PRODUCTION DE CELUI

(30) Priorität: 05.03.2015 DE 102015203908
(43) Veröffentlichungstag der Anmeldung: 10.01.2018
(73) Patentinhaber: Arburg GmbH + Co. KG, 72290 Lossburg (DE)
(72) Erfinder: FAULHABER, Werner, 72290 Lossburg Wittendorf (DE); DUFFNER, Eberhard, 72181 Starzach (DE); JASTRZEMBSKI, Jan-Peter, 97082 Würzburg (DE); KOCH, Simon-Frederik, 76131 Karlsruhe (DE); MÜLLER, Timo, 76275 Ettlingen (DE); MRKONJI , Marina, 76131 Karlsruhe (DE); PETER, Manuel, 76889 Oberotterbach (DE)
(74) Vertreter: Reinhardt, Harry
(86) Internationale Anmeldenummer: PCT/EP2016/054652
(87) Internationale Veröffentlichungsnummer: WO 2016/139342

(56) Entgegenhaltungen:
- DE-A1-102004 019 710
- DE-B3-102007 006 986
- GB-A- 1 307 831
- GB-A- 1 531 587
- US-A1- 2007 222 306
- US-A1- 2014 239 748

## Beschreibung

Die Erfindung betrifft einen Rotor für einen Elektromotor nach dem Oberbegriff des Anspruches 1 sowie ein Verfahren zur Herstellung eines derartigen Rotors nach dem Oberbegriff des Anspruches 14.

Elektromotoren sind in verschiedensten Ausführungen im praktischen Einsatz bewährt. Je nach Voraussetzung an verfügbarer elektrischer Energie, gewünschter Leistung, Betriebsdrehzahl, dynamischem Verhalten und verfügbarem Bauraum werden sie mit permanentmagnetischer oder elektromagnetischer Erregung, Speisung aus Gleich-, Wechsel- oder mehrphasigem Drehstrom, elektronisch oder mechanisch kommutiert in synchroner oder asynchroner Auslegung ausgestaltet. Insbesondere für bürstenlose, hochdynamische Servoantriebe, die vorzugsweise mit einem Rotor als Innenläufer ausgebildet sind, sind Rotorkonzepte bekannt, in denen hochwertige Seltene-Erden-Magnete in Blechschnitten eingelegt werden, die wiederum mit der in der Regel aus Stahl aufgebauten Motorwelle form- und/oder kraftschlüssig verbunden sind.

Rotoren mit diesem Aufbau tragen grundsätzlich zur Masseträgheit eines Servomotors bei, das heißt durch diesen Aufbau wird die Dynamik des Motors definiert. Betrachtet man den Aufbau detailliert, so fallen die Blechzuschnitte oder Blechstanzteile, die zur Vermeidung von Wirbelströmen im Magnetschlussbereich erforderlich sind, kaum ins Gewicht. In der Regel kann hierfür der Stanzabfall der Statorbleche verwendet werden. Der innere Teil des Rotors dient der Drehmomentübertragung, der äußere Bereich umfasst die Magnetfeldführung. Um Wirbelstromverluste im Rotor möglichst gering zu halten, sind die Bleche mit einer isolierenden Schicht beschichtet, wobei die Schichtdicken möglichst gering ausfallen. Die Bleche haben den größten Einfluss auf das Trägheitsmoment des Rotors.

Zur Ausgestaltung eines Hochmoment-Elektromotors in Leichtbauweise wurde bereits in der dem Oberbegriff des Anspruches 1 und 14 zugrundeliegenden DE 10 2004 014 640 A1 vorgeschlagen, tragende Strukturkomponenten als Faserverbundwerkstoffe auszubilden, um den Innenraum des Elektromotors frei zu halten. Der Magnetschlussbereich wurde dafür nicht verändert. Das Gleiche gilt für die US 2014/0239748 A1.
Aus der GB 1 307 831 A ist es bekannt, durch Verdichten und Pressen einer Pulvermischung aus bis zu 90% Metallpulver und Kunststoffmaterial, das anschließend gehärtet oder erwärmt wird, einen Magnetkern eines Elektroantriebs herzustellen. Ein Spritzgießen erfolgt dabei nicht.

Aus der US 2003/0063993 A1 ist ein Verfahren zum Einspritzen von ferromagnetischem Pulver mit einer Spritzeinheit und Einspritzen von nicht ferromagnetischem Pulver mit einer zweiten Spritzeinheit bekannt, um eine spritzgegossene Composite-Rotorkomponente herzustellen. Hierfür wird ein MIM Material verwendet, das mit Binder gebunden verarbeitbar und später in einem weiteren Verarbeitungsschritt "entbindert" und "gesintert" wird.

Die US 2003/0062790 A1 zeigt die Herstellung einer Rotorscheibe, bei der in einen mehrteiligen Rahmen als Schablone Pulvermaterialien gepresst werden, die mit Binder gebunden verarbeitbar sind und in einem weiteren Verarbeitungsschritt "entbindert" und "gesintert" werden.

Aus der DE 10 2007 006 986 B3 ist ein Rotor bekannt, bei dem ein faserverstärkter Kunststoff zur Drehmomentanbindung zwischen Motorwelle und klassischen Blechpaketen eingesetzt wird. Bei vom Durchmesser her gleichbleibender Antriebswelle ist der Grundkörper des Rotors äußerlich abschnittsweise konisch ausgebildet.

Bei dem aus der DE 10 2008 026 648 A1 bekannten Rotor mit einem geblechten Aufbau wird ein weichmagnetisches Material um ein Paket aus "Lamellen" platziert, in welche die Dauermagnete eingebaut sind. Die Lamellen sind in einem Kunststoffkörper verankert, der eine Kunststoffnabe zwischen Welle und Blechlamellen umfasst.

Die US 6,081,052 A offenbart einen geblechten Rotor, der in einem thermischen Verfahren mit einer Braze Technik im Sinne eines Hartlöt-Verfahrens hergestellt wird, indem Zwischenlagen zwischen Blechpaket und Permanentmagneten eingebracht werden.

Aus der US 2012/0091832 A1 ist ein Materialgemisch zur Verwendung auch für Motorkomponenten bekannt, das unter anderem in einer nicht metallischen Matrix weichmagnetisches Material verteilt aufnimmt.

Um eine möglichst hohe Leistungsdichte zu erhalten, ist aus der US 2007/0222306 A1 bekannt, Bereiche eines Kerns, welche zunächst mit Luft (µr=1) "gefüllt" sind, mit einem

Spritzgusswerkstoff zu versehen. Der Werkstoff weist eine höhere Permeabilität als Luft auf, wodurch eine höhere Leistungsdichte realisiert werden kann.

Aus dem Stand der Technik ist es ebenfalls bekannt, Rotoren für Elektromotoren auszuwuchten, indem entweder ein Positiv-Wuchten durch Anbringen von Gewichten oder ein Negativ-Wuchten mit einer Wuchtscheibe durch Materialabtrag erfolgt.

Ausgehend von diesem Stand der Technik liegt der vorliegenden Erfindung die Aufgabe zugrunde, einen Rotor für einen Elektromotor in Leichtbauweise zu schaffen, der bzw. die den geforderten Leistungskriterien gerecht wird, und ein entsprechendes Herstellungsverfahren zur Verfügung zu stellen.

Diese Aufgabe wird durch einen Rotor für einen Elektromotor mit den Merkmalen des Anspruches 1 sowie durch ein entsprechendes Herstellungsverfahren mit den Merkmalen des Anspruches 14 gelöst.

Dazu wird der Rotor hinsichtlich der Funktion seiner Teile betrachtet, wobei ein Kraftübertragungsbereich zur Übertragung von Moment und Kraft auf eine Motorwelle, ein Drehmomentübertragungsbereich zur Übertragung des Drehmoments vom Motor auf den Kraftübertragungsbereich, ein Magnetschlussbereich sowie auch ein Bereich zur Magnetfeldführung, in dem die Magnete angeordnet sind, betrachtet werden. Insbesondere im Magnetschlussbereich wird zur Magnetfeldführung nun das Blech ersetzt durch einen thermoplastischen Kunststoff mit einem magnetischen oder magnetisierbaren Füllstoff. Die Massereduzierung wird dabei vor allem dadurch erreicht, dass die Einbringung des Kunststoffmaterials genau auf den magnetisch relevanten Bereich beschränkt wird. Dieser Polymerwerkstoff wird im klassischen Kunststoff-Spritzgießverfahren kostengünstig und prozesssicher verarbeitet und auch hinsichtlich der geometrischen Anordnung zuverlässig platziert.

Wird diese Anordnung damit gepaart, dass gleichzeitig der Drehmomentübertragungsbereich hinsichtlich seiner Faserverbundwerkstoffe entsprechend ausgestaltet wird, kann auf wirtschaftliche Weise ein Rotor in Leichtbauweise hergestellt werden.

Basis für den Kunststoff mit dem magnetischen oder magnetisierbaren Füllstoff bildet ein Thermoplast, das mit einem weichmagnetischen Füllstoff mit möglichst hohem Füllgrad gefüllt wird. Füllgrade von vorzugsweise bis über 70 Volumenprozent sind hier erreichbar. Die erreichbare relative Permeabilität µr ist bei diesen Werkstoffen um Zehnerpotenzen geringer als bei einer klassischen "geblechten" Ausführungsform eines Rotors, auch wird die Sättigung deutlich früher erreicht. Gleichwohl ist bei einer derartigen Ausführung eine deutliche Massenreduzierung erreichbar. Zudem können bei der Auswahl der weichmagnetischen Füllstoffe Materialien in der Korngröße der Applikation entsprechend ausgeführt werden, was eine gute Dimensionierung und Anpassung des Rotors an seinen Einsatzzweck ermöglicht. Dies beeinflusst auch die Fließfähigkeit des zu erwartenden Compounds.

Sind die Füllstoffkörner oder -plättchen von dem sie umgebenden thermoplastischen Kunststoff beschichtet und im isolierenden Kunststoff räumlich verteilt eingebettet, ergibt sich eine elektrische Isolation zwischen den einzelnen weichmagnetischen Füllstoffkörnern, welche die Wirbelstromverluste des Rotors nahezu eliminiert.

Während also die Geometrie des Compounds hoher Dichte genau auf den magnetisch relevanten Bereich beschränkt wird, kann die Massenreduzierung dadurch gesteigert werden, dass die Drehmomentübertragung zur Motorwelle im Drehmomentübertragungsbereich mit einem weiteren Werkstoff umgesetzt wird, der hinsichtlich seiner Dichte vorzugweise deutlich geringer ist als die Dichte des hochgefüllten Kunststoffmaterials. Vorzugsweise wird im Drehmomentübertragungsbereich ein weiterer Kunststoff verwendet, der zur Verbesserung der mechanischen Eigenschaften vorzugsweise ebenfalls mit einem faserverstärkten Material ausgeführt ist. Damit wird die Geometrie des Drehmoment übertragenden Bauteils optimiert auf möglichst geringe Masse bei optimalen mechanischen Eigenschaften. Dieses günstige und leichte Material kann ebenfalls im Kunststoffspritzgießverfahren hergestellt werden, wobei beide Werkstoffe zusammen in einer Zwei-Komponenten-Anlage in einem Zyklus als Massenprodukt produziert werden können.

Die Magnete sind vorzugsweise formschlüssig gehalten, in dem die Geometrie der Außenkontur der Magnete und des Bereichs zur Magnetfeldführung entsprechend angepasst werden.

Vorzugsweise besteht der Rotor aus wenigstens einer einzelnen Scheibe, die selbsttragend ist, wobei die Dicke der Scheibe bzw. ihre Länge in Richtung der Motorwelle vorzugsweise der Länge eines Magneten oder der Länge eines Vielfachen der Länge eines Magneten entspricht. Dennoch ist es auch möglich, Magnete unterschiedlicher Länge parallel oder in Reihe auf einer Scheibe anzubringen.

Durch die einzelnen Scheiben kann bei Verbindung mehrerer Scheiben die Rotorlänge in gewissen Grenzen frei gewählt werden. Die Länge ist in der Regel ein ganzzahliges Vielfaches der Länge einer Scheibe des Rotors, jedoch sind auch Varianten denkbar, bei denen Scheiben unterschiedlicher Dicke für einen Rotor verwendet werden. Damit wird eine große Gestaltungsfreiheit hinsichtlich der Größe des Rotors abgestimmt auf die jeweilige Leistung erreicht.

Jede Scheibe überträgt ihr eigenes Drehmoment. Dadurch ist es auch möglich, im Zusammenspiel mit der Motorwelle die einzelnen Scheiben unterschiedlich auszugestalten, sodass sie mit größerem Abstand von der Abtriebseite des Elektromotors hin zum B-Lager, in dem üblicherweise der Geber angeordnet ist, hinsichtlich des für die Motorwelle freigehaltenen inneren Bereichs im Durchmesser innerlich kleiner werden. Je größer nämlich der Abstand einer Scheibe vom Abtrieb ist, umso geringere Drehmomente werden übertragen, so dass ein geringerer Durchmesser genügt. Dadurch kann die Masse des Rotors weiter verringert werden. Das Trägheitsmoment wird damit zwar nicht mehr wesentlich gesenkt, sehr wohl aber die Gesamtmasse.

Eine mit einem derartigen Rotor in Wirkverbindung stehende Motorwelle kann auch als Leichtbauwelle ausgebildet werden und ebenfalls aus Faserverbundwerkstoffen aufgebaut sein. Eine derartige Welle kann zum Beispiel als faserverstärkter Schlauch in Glas-, Karbon- oder Verbundfaserbauweise hergestellt werden. Zudem kann die Welle vorzugsweise als Hybridwelle mit metallischen Stummeln z.B. aus Stahl an ihren Enden an den beiden Lagerpunkten des B-Lagers mit Geber und des A-Lager mit Abtrieb ausgeführt werden.

Denkbar ist ebenso, den Kraft- und/oder Drehmomentübertragungsbereich insgesamt durch einen faserverstärkten Schlauch zu ersetzen und die Welle damit einstückig mit dem Drehmomentübertragungsbereich auszubilden, um eine weitere Massenreduzierung zu erreichen.

Vorzugsweise wird nach dem erfindungsgemäßen Verfahren der Rotor ggf. mitsamt Motorwelle durch Spritzgießen hergestellt. Besonders effektiv ist dabei eine Herstellung spritzgießtechnisch im Zwei-Komponenten Prozess. Es wird die Drehmomentanbindung aus faserverstärktem Material gespritzt und im zweiten Prozessschritt der Magnetschlussbereich aus SMC Material (oder umgekehrt). Nach dem Spritzgießen ist der Rotor fertig und für die Aufnahme der Magnete bereit. Die Magnete können bedarfsweise als Einlegeteile ebenfalls mit eingeformt werden. Ein Entbindern und/oder Sintern ist nicht erforderlich.

Weitere Vorteile ergeben sich aus den Unteransprüchen und der nachfolgenden Beschreibung eines bevorzugten Ausführungsbeispiels.

Im Folgenden wird die Erfindung an einem in den beigefügten Figuren dargestellten Ausführungsbeispiel näher erläutert. Es zeigen:
- Fig. 1a: eine dreidimensionale Darstellung eines Rotors ohne Magneten mit optimierter Kontur und Vielzahnanbindung,
- Fig. 1b: eine Draufsicht auf den Rotor gemäß 1a,
- Fig. 2a, 2b: eine Darstellung des Rotors gemäß Fig. 1a, 1b mit daran angebrachten Magneten,
- Fig. 3: einen Rotor mit Motorwelle in dreidimensionaler Darstellung, der aus mehreren einzelnen Scheiben mit einem Aufbau gemäß Fig. 2a gebildet ist,
- Fig. 4a, 4b: eine dreidimensionale schematische Darstellung des Rotors beim Herstellungsvorgang mit zugehörigen Angußkanälen,
- Fig. 5: einen Schnitt durch den Rotor mit eingegossener Motorwelle.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können, solange sie den Umfang der anhängenden Ansprüche nicht überschreiten. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen einen Rotor für einen Elektromotor, der üblicherweise mit einem zeichnerisch nicht dargestellten Stator zusammenarbeitet. Der Rotor ist im Ausführungsbeispiel als Innenläufer ausgebildet, grundsätzlich ist jedoch auch ein Aufbau als Außenläufer möglich, sofern Kraftübertragungsbereich 11, Drehmomentübertragungsbereich 13, Magnetschlussbereich 14 und ein Bereich 15 zur Magnetfeldführung in umgekehrter Reihenfolge von außen nach innen angeordnet werden.

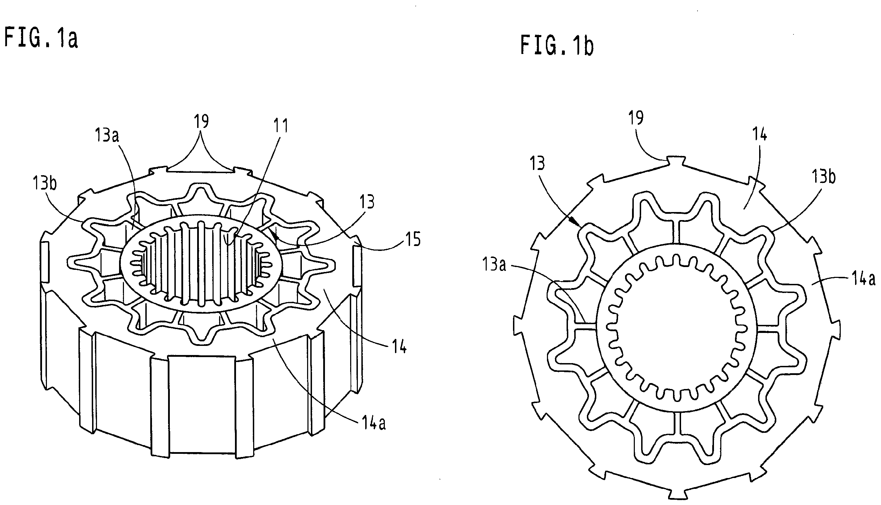

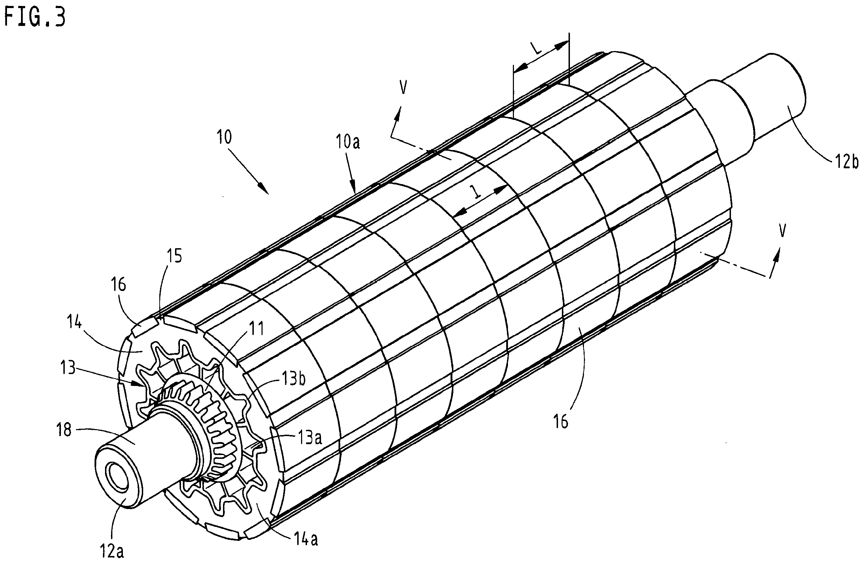

Der Rotor 10 weist einen Kraftübertragungsbereich 11 auf, der zur Wirkverbindung mit einer Motorwelle 12 gemäß Fig. 3 geeignet und bestimmt ist. Im Ausführungsbeispiel erfolgt die Übertragung der Momente und Kräfte vom Rotor auf die Motorwelle 12 über eine Vielzahnanbindung im Kraftübertragungsbereich 11, es sind aber auch andere Anbindungen zum Beispiel über eine Sechskantanbindung denkbar. Zum Kraftübertragungsbereich 11 gemäß Fig. 1b benachbart ist ein Drehmomentübertragungsbereich 13, der aus Faserverbundwerkstoffen aufgebaut ist. Dieser Bereich ist auf diese Funktion optimiert, denn Kräfte werden am äußeren Radius des Rotors 10 über die mit den im Stator eingeleiteten Strömen in Wirkverbindung stehenden Magnete 16 als Rotationskraft eingeleitet und in den Figuren innen über den Kraftübertragungsbereich 11 auf die Motorwelle 12 übertragen. In dem stegförmige Elemente 13a aufweisenden Drehmomentübertragungsbereich 13 erfolgt die Übertragung der Kräfte im Ausführungsbeispiel von außen nach innen. Deutlich zu erkennen ist auch, dass der Drehmomentübertragungsbereich 13 sternförmige Spitzen 13b aufweist, zwischen denen Verdickungen 14a des Magnetschlussbereichs 14 vorgesehen sind. Der sich darin wiederspiegelnde Aufbau sowohl des Drehmomentübertragungsbereichs 13 als auch des Magnetschlussbereichs 14 entspricht der Kraftmomentenlinie bei der Übertragung der Kräfte, das heißt es wird dort mehr Material vorgesehen, wo größere Kräfte übertragen werden müssen.

Im Magnetschlussbereich 14 werden üblicherweise metallische Elemente wie Bleche vorgesehen, um Wirbelströme zu vermeiden. An den Magnetschlussbereich 14 schließt ein Bereich 15 zur Magnetfeldführung an, der im Ausführungsbeispiel am Rotor außen liegt und in dem die Magnete 16 gelagert sind. Magnetschlussbereich 14 und der Bereich 15 zur Magnetfeldführung sind zum Drehmomentübertragungsbereich 13 benachbart angeordnet, aber auf der dem Kraftübertragungsbereich 11 gegenüberliegenden Seite des Drehmomentübertragungsbereichs 13. Der aus den Figuren ersichtliche Aufbau entspricht einem Aufbau des Rotors als Innenläufer, das heißt innerhalb eines außenliegenden Stators, grundsätzlich ist jedoch ein entsprechender Aufbau mit umgekehrter Anordnung der genannten Bereiche für einen Außenläufer möglich,
Im Ausführungsbeispiel wird nun im Magnetschlussbereich 14 ein mit einem magnetischen oder magnetisierbaren Füllstoff versehener thermoplastischer Kunststoff vorgesehen, das heißt das sonst dort üblicherweise verwendete Blech wird durch ein hochgefülltes Kunststoffmaterial ersetzt. Die Basis hierfür bildet in der Regel ein Thermoplast, der mit einem weichmagnetischen Füllstoff mit möglichst hohem Füllgrad gefüllt wird, der vorzugsweise nicht elektrisch leitend ist. Füllgrade bis >70 Volumenprozent sind hier erreichbar. Im konkreten Ausführungsbeispiel wird z.B. ein Polyamid hochgefüllt mit Weicheisen als SMC-Material (soft magnetic compound) verwendet. Der aktuelle Füllgrad beträgt dabei 57%. Dieser Polymerwerkstoff wird im klassischen Kunststoff-Spritzgießverfahren kostengünstig und prozesssicher verarbeitet, wodurch auch eine optimierte Anordnung gemäß den Figuren mit entsprechenden Verdickungen 14a unter unmittelbaren Anschluss an einen entsprechend ausgebildeten Drehmomentübertragungsbereich 13 möglich ist. Die mit einem derartigen Kunststoff erreichbare relative Permeabilität µr ist bei diesen Werkstoffen um Zehnerpotenzen geringer als bei einer klassischen "geblechten" Ausführung und auch sind die Sättigungen deutlich früher erreicht. In Versuchen hat sich jedoch herausgestellt, dass die so erreichte magnetische Permeabilität für einen so aufgebauten blechfreien Magnetschlussbereich für den Betrieb eines Elektromotors absolut ausreichend ist. Eine derartige Ausführung mit hoch gefülltem, thermoplastischem Kunststoffmaterial führt zudem zu einer deutlichen Massenreduzierung. Bei der Auswahl der weichmagnetischen Füllstoffe können die Materialien in der Korngröße auch auf die jeweilige Applikation angepasst werden, was die zu erwartende Fließfähigkeit des Compounds beeinflusst, sodass auch diesbezüglich eine konstruktive Optimierung an den jeweiligen Einsatzzweck möglich ist. Die Füllstoffkörner oder -plättchen sind von dem sie umgebenden thermoplastischen Kunststoff beschichtet und elektrisch isoliert und im isolierenden Kunststoff räumlich verteilt eingebettet, was gerade beim Spritzgießen und entsprechender Homogenisierung des Materials sichergestellt ist, so dass Wirbelstromverluste im Rotor nahezu eliminiert werden können.
Eine Massenreduzierung wird auch dadurch erreicht, dass die Geometrie des Kunststoffmaterials hoher Dichte, also des hochgefüllten thermoplastischen Kunststoffs bzw. Compounds, genau auf den magnetisch relevanten Bereich beschränkt wird. Während also im Magnetschlussbereich 14 dieses Material verarbeitet wird, kann die Drehmomentübertragung zur Motorwelle 12 im Drehmomentübertragungsbereich 13 durch einen weiteren Kunststoff erfolgen, dessen Dichte deutlich geringer ist. Die Drehmomentübertragung kann mit einem Kunststoff erfolgen, der zur Verbesserung der mechanischen Eigenschaften als faserverstärktes Material ausgeführt wird. Die Geometrie des Drehmoment übertragenden Bauteils kann dadurch auf möglichst geringe Masse bei optimalen mechanischen Eigenschaften optimiert werden. Da auch dieses günstige und leichte Material kostengünstig im Kunststoff-Spritzgießverfahren geformt werden kann, ergibt sich ein günstiger und leicht herzustellender Leichtbaurotor.

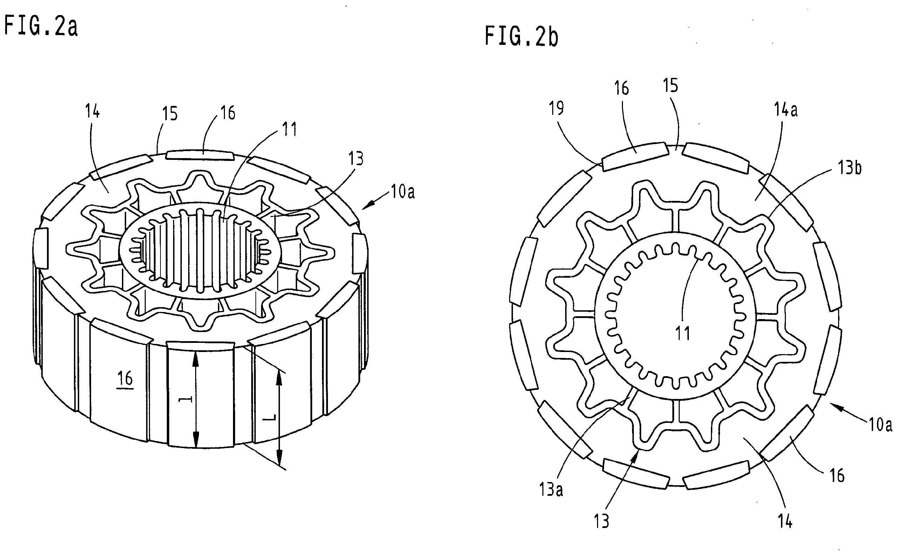

Aus den Figuren 1b und 2b wird deutlich, dass die Magnete 16 formschlüssig gehalten werden, indem die Geometrie der Außenkontur der Magnete 16 und des Bereichs 15 zur Magnetfeldführung entsprechend aneinander angepasst sind. Im Ausführungsbeispiel werden die Magnete 16 von sogenannten Schwalbenschwanzführungen 19 gehalten, was jedoch nur ein Beispiel für eine mögliche formschlüssige Halterung darstellt.

Der Rotor 10 besteht aus wenigstens einer Scheibe 10a, wobei die Länge L einer Scheibe 10a etwa der Länge I eines Magneten 16 oder eines Vielfachen der Länge I eines Magneten 16 entspricht (siehe Fig. 2a). Ein derartiger Aufbau gestattet einen modularen Aufbau, wie er sich insbesondere aus Fig. 3 ergibt. Zunächst ist der Rotor 10 dort aus einzelnen Scheiben 10a gebildet, sodass die Rotorlänge gemäß Fig. 3 in gewissen Grenzen auch frei gewählt werden kann. Die Länge des gesamten Rotors ist damit ein ganzzahliges Vielfaches einer einzelnen Scheibe 10a. Es sind jedoch auch Varianten denkbar, bei denen Rotorscheiben unterschiedlicher Dicke für einen Rotor verwendet werden, was zu einer variablen Rotorlänge, individuell angepasst auf den jeweiligen Leistungsbedarf führt.

Jede Scheibe 10a des Rotors 10 überträgt ihr eigenes Drehmoment, sie ist also für sich selbsttragend ausgebildet. Dies ermöglicht auch eine weitere Massenreduzierung im Hinblick auf die Motorwelle12. So ist es zum Beispiel denkbar die Motorwelle 12 zum B-Lager hin, das heißt weg vom Abtrieb 18, der in Fig. 3 links vorgesehen ist, hin zum Geber schlanker werden zu lassen. Dies geht damit einher, dass der aus mehreren Scheiben 10a gebildete Rotor 10 von Scheibe zu Scheibe einen Kraftübertragungsbereich 11 mit unterschiedlichem Innendurchmesser aufweist, wobei der Durchmesser mit zunehmendem Abstand vom Abtrieb 18 geringer wird. Bedarfsweise kann auch der jeweilige Drehmomentübertragungsbereich 13 der einzelnen Scheiben entsprechend angepasst werden, der dann gegebenenfalls innerhalb der Scheibe dicker ausfallen kann. Das Trägheitsmoment wird damit nicht mehr wesentlich gesenkt, sehr wohl aber die Gesamtmasse. Denkbar ist auch, den Kraftübertragungsbereich 11 mit der Motorwelle 12 einstückig auszubilden.

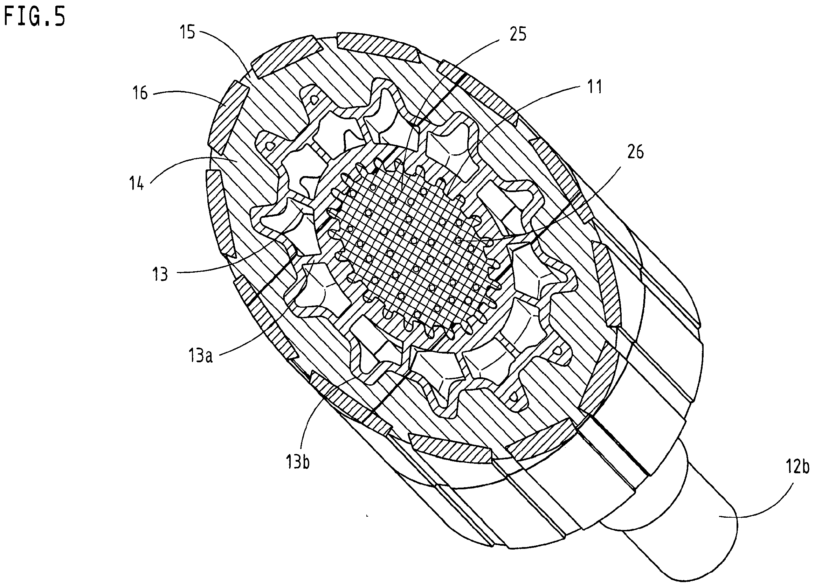

Als Leichtbauwelle könnte die Motorwelle 12 zum Beispiel als faserverstärkter Schlauch aus Glas-, Carbon- oder Verbundfaserwerkstoffen hergestellt werden. Eine derartige Motorwelle 12 kann zum Beispiel als Hybridwelle mit metallischen Stummeln 12a, 12b an ihren Enden ausgebildet sein, die die Lagerpunkte als A-Lager mit dem Abtrieb 18 und als B-Lager hin zum Geber bilden. Eine derartige Motorwelle könnte im Schleuderverfahren in die zusammengefügten Scheiben 10a des Rotors 10 eingegossen werden. Die Scheibe 10a des Rotors 10 wird dafür vorzugsweise mit Abdichtungen ausgestattet. Ein derartiger Herstellungsschritt könnte erfolgen, wie z.B. in Fig. 5 dargestellt. In den Innenraum des Kraftübertragungsbereichs 11 wird der Schlauch mit seinen Fasern 26 zusammen mit einer definierten Menge an Harz 25 eingeführt, welches anschließend im Schleuderverfahren verteilt wird. Dabei kommt der Schlauch und das Harz 25 zur Anlage an der Wandung des Innenraumes und tränkt, falls das Material des Kraftübertragungsbereichs die Möglichkeit dazu bietet, den Kraftübertragungsbereich 11 und oder legt sich an der Wandung des Innenraums an und härtet in dieser Stellung aus.

Ebenso ist denkbar, den Drehmoment übertragenden Teil komplett durch den faserverstärkten Schlauch zu ersetzen, das heißt Motorwelle 12 und Kraftübertragungsbereich 11 gemeinsam aus einem Werkstoff herzustellen. In diesem Fall würde die Motorwelle hinter dem Lager einen Durchmessersprung erfahren und dann an den Drehmomentübertragungsbereich 13 anschließen, gegebenenfalls könnte aber auch dieser gesamte Teil, der aus Motorwelle 12, Kraftübertragungsbereich 11 und Drehmomentübertragungsbereich 13 besteht, aus dem faserverstärkten Kunststoff hergestellt werden, sodass sich dieser Bereich bis zum Magnetschlussbereich 14 erstreckt. Durch diese Maßnahmen wäre nochmals eine deutliche Massenreduzierung möglich.

Die Motorwelle 12 kann konisch oder abgestuft ausgebildet werden, wobei sie sich mit zunehmendem Abstand vom Abtrieb 18 verjüngt. Damit wird die Massenträgheit reduziert und der Wellendurchmesser an den Geber angepasst. Im Ausführungsbeispiel trägt die Motorwelle 12 auf der Höhe der ersten Scheibe in Fig. 3 links 100% des Drehmoments, an der am anderen Ende in Fig. 3 rechts angeordneten Scheibe weniger als 5% des Drehmoments. Alternativ oder ergänzend kann die Motorwelle 12 auch eine sich einseitige verjüngende konische Bohrung aufweisen, die sich mit zunehmendem Abstand vom Abtrieb 18 vergrößert.

Um ein einfaches Wuchten des Rotors zu ermöglichen, können die Magnete 16 in der Zuführung in Form und Masse erfasst werden. Dies entspricht einem Inline-Wuchten der einzelnen Scheibe 10a durch gezielte Magnetzuführung und Positionierung auf der Scheibe. Die Magnete haben Toleranzen in der Masse und können somit gezielt zum Wuchten verwendet werden. Damit können die Magnete 16 mit optimaler Masseverteilung in Sets pro Scheibe 10a zur Montage bereitgestellt werden. Die entsprechende Bestückungsreihenfolge kann zum Beispiel direkt auf den Magneten aufgebracht werden. Eine eventuelle Unwucht des Magnetschlussbereichs 14 und des Bereich 15 zur Magnetfeldführung werden vor der Montage der Motorwelle 12 ermittelt und durch entsprechende Wahl der Winkelposition auf der Welle weitgehend eliminiert. Damit erfolgt ein zweites Inline-Wuchten durch angepasste Winkelstellung der einzelnen Scheiben 10a auf der Motorwelle 12.

Ergänzend ist es im Stand der Technik bekannt, eine Wucht mit einem Wuchtgel zu erreichen. Ein derartiges Wuchtgel kann im Innenraum des Kraftübertragungsbereichs 11 oder auch des Drehmomentübertragungsbereichs 13 eingebracht werden, damit sich bei Inbetriebnahme der Rotor selbst wuchtet. Das Wuchtgel legt sich dynamisch in einem sich drehenden Hohlraum an die unwuchtige Stelle. Ein derartiges Wuchtgel ist in einem zugehörigen Verfahren als DFC®-System am Markt bekannt.

Insgesamt ergibt sich durch Verwendung von einem mit einem magnetischen oder magnetisierbaren Füllstoff versehenen thermoplastischen Kunststoff als je nach Volumenanteil variables Magnetschlussmaterial, das zur Minimierung der Wirbelstromverluste und zur Anpassung der Motoreigenschaften wie Dynamik und Drehmoment auf einfach Weise an die jeweiligen Anforderungen verwendet wird, ein günstig herzustellender Rotor für einen Elektromotor. Im Wesentlichen weist dieser Rotor 10 einen dreiteiligen schaligen Aufbau mit einem Bereich 15 zur Magnetfeldführung, einem Magnetschlussbereich 14 aus einem entsprechend hochgefüllten thermoplastischen Kunststoff, einem auf Leichtbau und Steifigkeit optimierten Drehmomentübertragungsbereich 13 aus vorzugsweise faserverstärktem Kunststoff und einem Kraftübertagungsbereich 11 mit Anbindung an eine Leichtbauwelle auf.

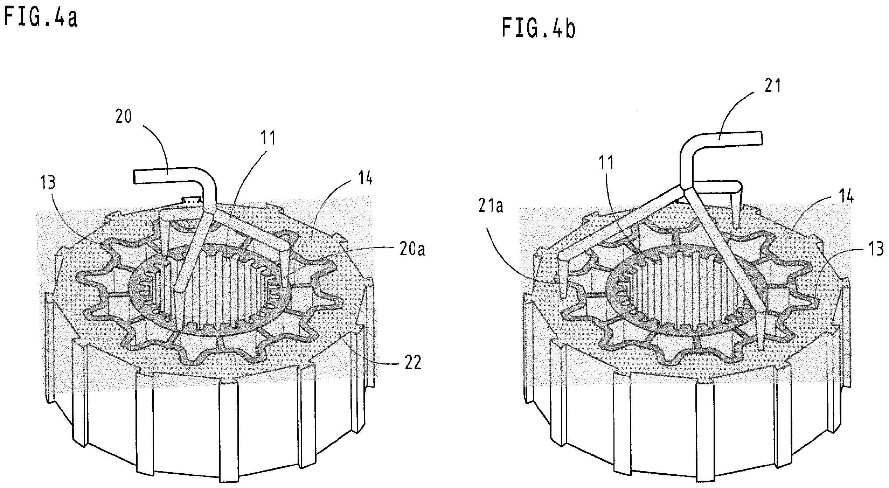

Verfahrensgemäß wird der Rotor 10 für einen Elektromotor ggf. in Verbindung mit der Motorwelle 11 durch Spritzgießen vorzugsweise auf einer Kunstsoff-Spritzgießmaschine hergestellt. Gemäß Fig. 4a wird dabei über den Angusskörper 20 und den Anguss 20a ein faserverstärkter Kunststoff eingespritzt. Dadurch werden der Kraftübertragungsbereich 11 und/oder der Drehmomentübertragungsbereich 13 hergestellt. An diesen so hergestellten Drehmomentübertragungsbereich wird der blechfreie Magnetschlussbereich 14 und der Bereich 15 zur Magnetfeldführung ebenfalls durch Spritzgießen eines mit einem magnetischen oder magnetisierbaren Füllstoff versehenen thermoplastischen Kunststoffs gemäß Fig. 4b über den Angusskörper 21 und den Anguss 21a angeformt. Vorzugsweise kann diese Herstellung in einem Arbeitsgang durch Zweikomponentenspritzgießen auf einer Spritzgießmaschine, vorzugsweise auf einer Kunststoff-Spritzgießmaschine erfolgen, indem beim ersten Einspritzen das eine Material in den Formhohlraum für den Kraftübertragungsbereich 11 und/oder der Drehmomentübertragungsbereich 13 eingespritzt wird. Ist dieses Material ausgehärtet, wird mit einem zweiten Formhohlraum, der an den bereits hergestellten Drehmomentübertragungsbereich 13 anschließt das zweite Material für den Magnetschlussbereich 14 und den Bereich 15 zur Magnetfeldführung eingespritzt. Die Magnete können dabei als Einlegeteile eingebunden werden, so dass der Rotor fertig aus der Spritzgießmaschine entnommen werden kann.

Durch das durch Kunststoff-Spritzgießen, vorzugsweise im Zwei-Komponenten-Spritzgießen verarbeitbare Magnetschlussmaterial ist es möglich, mit werkstoffgerechten Inline-Verfahren eine effektive und effiziente Leichtbauanbindung der Motorwelle 12 zu realisieren.

### Bezugszeichenliste

- 10: Rotor
- 10a: Scheibe
- 11: Kraftübertragungsbereich
- 12: Motorwelle
- 12a, 12b: Ende
- 13: Drehmomentübertragungsbereich
- 13a: stegförmiges Element
- 13b: Spitze
- 14: Magnetschlussbereich
- 14a: Verdickung
- 15: Bereich zur Magnetfeldführung
- 16: Magnet
- 18: Abtrieb
- 19: Schwalbenschwanzführungen
- 20, 21: Angusskörper
- 20a, 21a: Anguss
- 22: Körner
- 25: Harz
- 26: Faser

- l: Länge von 16
- L: Länge von 10

## Patentansprüche

1. Rotor (10) für einen Elektromotor mit
- einem Kraftübertragungsbereich (11), der zur kraftübertragenden Wirkverbindung mit einer Motorwelle (12) geeignet oder bestimmt ist,
- einem dem Kraftübertragungsbereich (11) benachbarten Drehmomentübertragungsbereich (13) aus Faserverbundwerkstoffen,
- einem Magnetschlussbereich (14),
- einem Bereich (15) zur Magnetfeldführung, in dem Magnete (16) gelagert sind, wobei der Magnetschlussbereich (14) und der Bereich (15) zur Magnetfeldführung auf der dem Kraftübertragungsbereich (11) gegenüberliegenden Seite des Drehmomentübertragungsbereichs (13) angeordnet sind,
**dadurch gekennzeichnet, dass** der durch Spritzgießen geformte, blechfreie Magnetschlussbereich (14) einen mit einem magnetischen oder magnetisierbaren Füllstoff versehenen thermoplastischen Kunststoff aufweist.

2. Rotor nach Anspruch 1, **dadurch gekennzeichnet, dass** der Füllstoff ein weichmagnetischer Füllstoff ist und dass Körner (22) des weichmagnetischen Füllstoffs durch den thermoplastischen Kunststoff elektrisch isoliert sind und/oder dass der thermoplastische Kunststoff als Polymerwerkstoff mit dem Füllstoff hochgefüllt ist, wobei vorzugsweise der Füllgrad mehr als 70 Volumenprozent beträgt.

3. Rotor nach Anspruch 1 oder 2, **dadurch gekennzeichnet, dass** auch der Kraftübertragungsbereich (11) aus Faserverbundwerkstoffen gebildet und/oder durch Spritzgießen geformt ist.

4. Rotor nach einem der vorhergehenden Ansprüche, **dadurch gekennzeichnet, dass** die Dichte des Faserverbundwerkstoffes im Drehmomentübertragungsbereich (13) geringer ist als die Dichte des mit den magnetischen oder magnetisierbaren Füllstoff versehenen thermoplastischen Kunststoffs im Magnetschlussbereich (14).

5. Rotor nach einem der vorhergehenden Ansprüche, **dadurch gekennzeichnet, dass** die Magnete (16) im Bereich (15) der Magnetfeldführung formschlüssig gehalten sind.

6. Rotor nach einem der vorhergehenden Ansprüche, **dadurch gekennzeichnet, dass** der Rotor (10) als Innenläufer ausgebildet ist und/oder als wenigstens eine Scheibe (10a) ausgebildet ist.

7. Rotor nach Anspruch 6, **dadurch gekennzeichnet, dass** die Länge (L) einer Scheibe (10a) etwa der Länge (I) eines Magneten (16) oder eines Vielfachen der Länge (I) eines Magneten (16) entspricht und/oder dass der Rotor mehrere Scheiben (10a) aufweist, die eine unterschiedliche Länge haben.

8. Rotor nach Anspruch 6 oder 7, **dadurch gekennzeichnet, dass** der Rotor (10) aus mehreren selbsttragenden Scheiben (10a) gebildet ist, die vorzugsweise einen Kraftübertragungsbereich (11) mit einem unterschiedlichem Innendurchmesser aufweisen, wobei der Innendurchmesser mit zunehmenden Abstand vom Abtrieb (18) geringer wird.

9. Rotor nach einem der vorhergehenden Ansprüche, **dadurch gekennzeichnet, dass** im Innenraum des Kraftübertragungsbereichs (11) und/oder des Drehmomentübertragungsbereichs (13) ein Wuchtgel zur Anlage kommt.

10. Rotor nach einem der vorhergehenden Ansprüche, **dadurch gekennzeichnet, dass** der Kraftübertragungsbereich (11) mit der Motorwelle (12) einstückig ist.

11. Rotor nach Anspruch 10, **dadurch gekennzeichnet, dass** die Motorwelle (12) aus Faserverbundwerkstoffen gebildet und/oder durch Spritzgießen geformt ist.

12. Rotor nach Anspruch 10 oder 11, **dadurch gekennzeichnet, dass** die Motorwelle (12) an ihren Enden (12a), 12b) metallische Stummel aufweist.

13. Rotor nach einem der Ansprüche 10 bis 12, **dadurch gekennzeichnet, dass** die Motorwelle (12) konisch oder abgestuft sich mit zunehmendem Abstand vom Abtrieb (18) verjüngt und/oder eine sich einseitig verjüngende konische Bohrung aufweist, die sich mit zunehmendem Abstand vom Abtrieb (18) vergrößert.

14. Verfahren zur Herstellung eines Rotors (10) gemäß einem der vorhergehenden Ansprüche für einen Elektromotor mit
- einem Kraftübertragungsbereich (11), der zur kraftübertragenden Wirkverbindung mit einer Motorwelle (12) geeignet oder bestimmt ist,
- einem dem Kraftübertragungsbereich (11) benachbarten Drehmomentübertragungsbereich (13) aus Faserverbundwerkstoffen,
- einem Magnetschlussbereich (14),
- einem Bereich (15) zur Magnetfeldführung, in dem Magnete (16) gelagert sind, wobei der Magnetschlussbereich (14) und der Bereich (15) zur Magnetfeldführung auf der dem Kraftübertragungsbereich (11) gegenüberliegenden Seite des Drehmomentübertragungsbereichs (13) angeordnet sind,
wobei der Kraftübertragungsbereich (11) und/oder der Drehmomentübertragungsbereich durch Spritzgießen eines faserverstärkten Kunststoffs hergestellt werden, **dadurch gekennzeichnet, dass** auch der blechfreie Magnetschlussbereich (14) durch Spritzgießen eines mit einem magnetischen oder magnetisierbaren Füllstoff versehenen thermoplastischen Kunststoffs hergestellt wird.

15. Verfahren nach Anspruch 14, **dadurch gekennzeichnet, dass** der Rotor durch Zweikomponentenspritzgießen in einem Arbeitsgang auf einer Spritzgießmaschine, vorzugsweise auf einer Kunststoff-Spritzgießmaschine hergestellt wird.

16. Verfahren nach Anspruch 14 oder 15, **dadurch gekennzeichnet, dass** zur Herstellung des Rotors (10) in Verbindung mit der Motorwelle (12) im Innenraum des Kraftübertragungsbereichs (11) ein Schlauch aus Verbundfaserwerkstoffen zusammen mit einem Harz (26) eingeschoben wird, wobei durch Schleudern des Rotors um seine Längsachse das Harz (25) und/oder ein Wuchtgel an die Wandung des Innenraums angelegt wird und dort aushärtet.

## Claims

1. Rotor (10) for an electric motor, comprising
- a force transmission region (11), which is suitable or is intended for a force-transmitting operative connection to a motor shaft (12),
- a torque transmission region (13) made of fibre composite materials adjoining the force transmission region (11),
- a magnetic connection region (14),
- a region (15) for magnetic field guidance, in which magnets (16) are mounted,
wherein the magnetic connection region (14) and the region (15) for magnetic field guidance are arranged on the opposite side of the torque transmission region (13) to the force transmission region (11),
**characterised in that** the lamination-free magnetic connection region (14) formed by injection moulding comprises a thermoplastic plastics provided with a magnetic or magnetisable filler.

2. Rotor according to claim 1, **characterised in that** the filler is a soft magnetic filler and **in that** grains (22) of the soft magnetic filler are electrically insulated by the thermoplastic plastics and/or the thermoplastic plastics material as a polymer material is highly filled with the filler, wherein preferably the filling level is more than 70 percent by volume.

3. Rotor according to claim 1 or 2, **characterised in that** the force transmission region (11) is also formed of fibre composite materials and/or by injection moulding.

4. Rotor according to one of the preceding claims, **characterised in that** the density of the fibre composite material is lower in the torque transmission region (13) than the density of the thermoplastic plastics provided with the magnetic or magnetisable filler in the magnetic connection region (14).

5. Rotor according to one of the preceding claims, **characterised in that** the magnets (16) are held in positively locking manner in the region (15) of the magnetic field guidance.

6. Rotor according to one of the preceding claims, **characterised in that** the rotor (10) is configured as an internal rotor and/or is configured as at least one disk (10a).

7. Rotor according to claim 6, **characterised in that** the length (L) of a disk (10a) approximately corresponds to the length (I) of a magnet (16) or to a multiple of the length (I) of a magnet (16) and/or the rotor comprises a plurality of disks (10a) which have a differing length.

8. Rotor according to claim 6 or 7, **characterised in that** the rotor (10) is constructed from a plurality of self-supporting disks (10a) which preferably have a force transmission region (11) with a differing internal diameter, wherein the internal diameter lessens with increasing spacing from the output (18).

9. Rotor according to one of the preceding claims, **characterised in that** a balancing gel comes to bear against the interior of the force transmission region (11) and/or of the torque transmission region (13).

10. Rotor according to one of the preceding claims, **characterised in that** the force transmission region (11) is integral with the motor shaft (12).

11. Rotor according to claim 10, **characterised in that** the motor shaft (12) is made of fibre composite materials and/or formed by injection moulding.

12. Rotor according to claim 10 or 11, **characterised in that** the motor shaft (12) has metallic journals at its ends (12a, 12b).

13. Rotor according to one of the claims 10 to 12, **characterised in that** the motor shaft (12) narrows conically or in a stepped configuration with increasing spacing from the output (18) and/or has a conical bore narrowing on one side, which enlarges with increasing spacing from the output (18).

14. Method for producing a rotor (10) according to one of the preceding claims for an electric motor, comprising
- a force transmission region (11), which is suitable or is intended for force-transmitting operative connection to a motor shaft (12),
- a torque transmission region (13) made of fibre composite materials adjoining the force transmission region (11),
- a magnetic connection region (14),
- a region (15) for magnetic field guidance, in which magnets (16) are mounted,
wherein the magnetic connection region (14) and the region (15) for magnetic field guidance are arranged on the opposite side of the torque transmission region (13) to the force transmission region (11),
wherein the force transmission region (11) and/or the torque transmission region are produced by injection moulding of a fibre-reinforced plastics material, **characterised in that** the lamination-free magnetic connection region (14) is also produced by injection moulding of a thermoplastic plastics material provided with a magnetic or magnetisable filler.

15. Method according to claim 14, **characterised in that** the rotor is produced by two-component injection moulding in one operation on an injection moulding machine, preferably on a plastics material injection moulding machine.

16. Method according to claim 14 or 15, **characterised in that** for the production of the rotor (10) in conjunction with the motor shaft (12) in the interior of the force transmission region (11), a tube of composite fibre materials is inserted together with a resin (26), wherein by means of rotation of the rotor about its longitudinal axis, the resin (25) and/or a balancing gel is applied against the wall of the interior and is cured there.

## Revendications

1. Rotor (10) pour moteur électrique comportant
- une zone de transmission de force (11) qui est appropriée ou prévue pour la liaison effective de transmission de force avec un arbre de moteur (12),
- une zone de transmission de moment de rotation (13) adjacente à la zone de transmission de force (11) et en matériaux composites fibreux,
- une zone d'isolation magnétique (14),
- une zone (15) pour le guidage du champ magnétique dans laquelle se trouvent des aimants (16), la zone d'isolation magnétique (14) et la zone (15) pour le guidage du champ magnétique étant disposées du côté de la zone de transmission de moment de rotation (13) opposé à la zone de transmission de force (11),
**caractérisé en ce que** la zone d'isolation magnétique (14) formée par injection, exempte de métal présente un matériau thermoplastique pourvu d'un matériau de remplissage magnétique ou magnétisable.

2. Rotor selon la revendication 1, **caractérisé en ce que** le matériau de remplissage est un matériau de remplissage magnétique doux et **en ce que** des grains (22) du matériau de remplissage magnétique doux sont isolés électriquement par le matériau thermoplastique et/ou **en ce que** le matériau thermoplastique en tant que matériau polymère est fortement chargé en matériau de remplissage, le taux de remplissage étant de préférence supérieur à 70 % en volume.

3. Rotor selon la revendication 1 ou 2, **caractérisé en ce que** la zone de transmission de force (11) est aussi formée de matériaux composites fibreux et/ou est formé par injection.

4. Rotor selon l'une des revendications précédentes, **caractérisé en ce que** l'épaisseur du matériau composite fibreux dans la zone de transmission de moment de rotation (13) est inférieure à l'épaisseur du matériau thermoplastique pourvu de matériau de remplissage magnétique ou magnétisable dans la zone d'isolation magnétique (14).

5. Rotor selon l'une des revendications précédentes, **caractérisé en ce que** les aimants (16) sont maintenus dans la zone (15) du guidage du champ magnétique par complémentarité de forme.

6. Rotor selon l'une des revendications précédentes, **caractérisé en ce que** le rotor (10) est réalisé est réalisé en tant que rotor interne et/ou est réalisé sous la forme d'au moins un disque (10a).

7. Rotor selon la revendication 6, **caractérisé en ce que** la longueur (L) d'un disque (10a) correspond environ à la longueur (1) d'un aimant (16) ou d'un multiple de la longueur (1) d'un aimant (16) et/ou **en ce que** le rotor présente plusieurs disques (10a), qui ont une longueur différente.

8. Rotor selon la revendication 6 ou 7, **caractérisé en ce que** le rotor (10) est formé de plusieurs disques autoportés (10a), qui présentent de préférence une zone de transmission de force (11) avec un diamètre interne différent, le diamètre interne diminuant lorsque la distance par rapport à l'entraînement (18) augmente.

9. Rotor selon l'une des revendications précédentes, **caractérisé en ce qu'**à l'intérieur de la zone de transmission de force (11) et/ou de la zone de transmission de moment de rotation (13) un gel d'équilibrage est appliqué.

10. Rotor selon l'une des revendications précédentes, caractérisé en que la zone de transmission de force (11) est d'un seul tenant avec l'arbre de moteur (12).

11. Rotor selon la revendication 10, **caractérisé en ce que** l'arbre de moteur (12) est formé de matériaux composites fibreux et/ou est formé par injection.

12. Rotor selon la revendication 10 ou 11, **caractérisé en ce que** l'arbre de moteur (12) présente à ses extrémités (12a, 12b) des embouts métalliques.

13. Rotor selon l'une des revendications 10 à 12, **caractérisé en ce que** l'arbre de moteur (12) rétrécit de façon conique ou étagée lorsque la distance par rapport à l'entraînement (18) augmente et/ou présente une perforation conique rétrécissant d'un seul côté qui augmente lorsque la distance par rapport à l'entraînement (18) augmente.

14. Procédé de fabrication d'un rotor (10) selon l'une des revendications précédentes pour un moteur électrique comportant :
- une zone de transmission de force (11), qui est apte ou prévue pour la liaison effective de transmission de force avec un arbre de moteur (12),
- une zone de transmission de moment de rotation (13) adjacente à la zone de transmission de force (13) et en matériaux composites fibreux,
- une zone d'isolation magnétique (14),
- une zone (15) pour le guidage du champ magnétique, dans laquelle se trouvent des aimants (16), la zone d'isolation magnétique (14) et la zone (15) pour le guidage du champ magnétique étant disposées du côté de la zone de transmission de moment de rotation (13) opposé à la zone de transmission de force (11),
- la zone de transmission de force (11) et/ou la zone de transmission de moment de rotation étant fabriqués par injection d'un matériau plastique renforcé par des fibres,
**caractérisé en ce que** la zone d'isolation magnétique (14) exempte de métal est aussi fabriquée par injection d'un matériau thermoplastique pourvu d'un matériau de remplissage magnétique ou magnétisable.

15. Procédé selon la revendication 14, **caractérisé en ce que** le rotor est fabrique par bi-injection de deux composants en une étape dans une machine de moulage par injection, de préférence dans une machine de moulage par injection de matière plastique.

16. Procédé selon la revendication 14 ou 15, caractérisé en que pour la fabrication du rotor (10) en liaison avec l'arbre de moteur (12), à l'intérieur de la zone de transmission de force (11), un tube en matériaux composites fibreux est glissé avec une résine (25), la résine (25) et/ou le gel d'équilibrage étant mis(e) lors du démarrage du rotor autour de son axe longitudinal sur la paroi interne et y durcissant.
